# FASCICULE DE BREVET EUROPEEN

(11) **EP 2 142 817 B1**
(45) Date de publication et mention de la délivrance du brevet: **15.06.2011**
(21) Numéro de dépôt: 08788170.2
(22) Date de dépôt: 11.04.2008
(51) Int. Cl.: F16D 1/072, F16D 9/06, F16C 35/063, F16H 55/36, B60H 1/32

(54) **COMPRESSEUR DE CLIMATISATION**
KLIMAANLAGENVERDICHTER
AIR CONDITIONING COMPRESSOR

(30) Priorité: 09.05.2007 FR 0754932
(43) Date de publication de la demande: 13.01.2010
(73) Titulaire: Aktiebolaget SKF, 415 50 Göteborg (SE)
(72) Inventeur: VARNOUX, Laurent, F-37550 Saint-Avertin (FR); LESCORAIL, Romuald, F-37380 Saint Laurent en Gâtines (FR)
(74) Mandataire: Dossmann, Gérard
(86) Numéro de dépôt international: PCT/FR2008/050652
(87) Numéro de publication internationale: WO 2008/145885

(56) Documents cités:
- GB-A- 2 097 489
- JP-A- 2005 273 917
- US-A1- 2003 098 007
- US-B1- 6 332 842

## Description

La présente invention concerne le domaine des compresseurs de climatisation pour véhicules automobiles.

Dans les dispositifs d'entraînement de compresseurs de climatisation, il est possible d'utiliser des embrayages électromagnétiques. Dans les autres cas, la poulie actionnée par une courroie d'entraînement entraîne l'arbre du compresseur par l'intermédiaire d'un plateau d'entraînement. Un fusible mécanique peut être interposé entre la poulie et l'arbre de compresseur à entraîner, afin qu'en cas d'un excédent de couple important, par exemple provoqué par un grippage du compresseur, la poulie puisse continuer à tourner. En cas de blocage de la poulie, la courroie se mettrait à glisser sur la poulie, ce qui aboutirait rapidement à la destruction de ladite courroie. D'autres organes également entraînés par ladite courroie se trouveraient alors privés d'entraînement. Ce type de dispositif est décrit notamment par les documents US 6 332 842 ou US 2003 /00 98 007.

Toutefois, il est nécessaire de monter le roulement muni de sa poulie sur l'arbre de compresseur, puis de monter un circlips de fixation axiale du roulement sur l'arbre, dans une rainure usinée dans l'arbre et enfin de monter le plateau d'entraînement. Le nombre d'opérations effectuées chez l'équipementier fabriquant le compresseur est donc élevé. Ces opérations sont en outre difficilement automatisables. Il en résulte des coûts élevés.

L'invention vise à remédier aux inconvénients évoqués ci-dessus.

L'invention propose un compresseur de climatisation nécessitant un faible nombre d'opérations en vue de son montage, ces opérations pouvant être automatisées.

Le compresseur de climatisation est pourvu d'un carter, d'un arbre apte à tourner autour d'un axe, et d'un dispositif de transmission de couple comprenant une poulie, un palier à roulement disposé dans la poulie, et un organe transmetteur de couple. Le palier à roulement comprend une bague intérieure, une bague extérieure et au moins une rangée d'éléments roulants. L'organe transmetteur de couple comprend une partie externe liée angulairement à la poulie, une partie interne fixée à l'arbre et au moins deux bras reliant la partie externe et la partie interne. Des espaces libres sont ménagés entre les bras. L'alésage de la bague intérieure présente un rayon supérieur à la distance entre l'axe de rotation et une extrémité interne desdits espaces libres pour permettre l'introduction d'un outil de sertissage. Des déformations plastiques locales du carter interfèrent avec une face frontale de la bague intérieure. Les déformations plastiques locales sont disposées dans l'alignement axial desdits espaces libres dans au moins une position angulaire relative entre l'organe transmetteur de couple et la bague intérieure.

Les déformations plastiques peuvent être obtenues à faible coût. Les déformations plastiques peuvent être séparées angulairement les unes des autres.

Dans un mode de réalisation, les bras comprennent une zone de faible section destinée à se rompre en cas de couple supérieur à un seuil. Les zones de faible section peuvent être disposées à proximité de la partie interne et présentent une épaisseur axiale inférieure à celle du reste des bras. Les zones de faible section peuvent être obtenues par moletage circulaire d'une partie radiale.

Dans un mode de réalisation, la partie externe comprend une pluralité de doigts axiaux. Un manchon élastique allongé angulairement peut être disposé autour d'au moins un doigt. Le manchon assure un amortissement de mouvement angulaire de la poulie par rapport au plateau. Ledit manchon peut être monté dans une ouverture de la partie externe de la poulie. Le manchon peut être pourvu d'un trou formant logement pour un doigt. Le trou peut être prévu à distances inégales des bords latéraux du manchon pour favoriser l'amortissement dans le sens de transmission du couple.

Un procédé de montage d'un compresseur de climatisation peut comprendre les étapes ci après:
- on monte sur un arbre de compresseur un ensemble comprenant une poulie, un palier à roulement disposé dans la poulie et comprenant une bague intérieure, une bague extérieure et au moins une rangée d'éléments roulants, et un organe transmetteur de couple comprenant une partie externe liée angulairement à la poulie, une partie interne et au moins deux bras reliant la partie externe et la partie interne, des espaces libres étant ménagés entre les bras, des espaces libres étant ménagés entre les bras, l'alésage de la bague intérieure présentant un rayon supérieur à la distance entre l'axe de rotation et une extrémité interne desdits espaces libres,
- on sertit la bague intérieure sur un carter de compresseur par l'introduction d'un outil de sertissage entre les bras de l'organe transmetteur de couple, ledit outil étant muni de plusieurs dents axiales passant dans les espaces libres ménagés entre les bras et formant poinçons repoussant la matière du carter contre la face frontale de la bague intérieure lors d'un mouvement axial.

L'ensemble peut être fabriqué en un premier établissement industriel puis livré à un deuxième établissement industriel assurant le montage de l'ensemble sur une machine menée par exemple un compresseur. Le montage de l'ensemble s'effectue par un mouvement axial dudit ensemble par rapport à l'arbre et au carter de compresseur, puis par un outil de sertissage venant écraser une partie non tournante, par exemple un rebord de carter, contre la bague intérieure du roulement.

Dans un mode de réalisation, l'étape de montage de l'ensemble sur un arbre de compresseur comprend l'emmanchement de la bague intérieure sur l'arbre. L'emmanchement peut être serré ou non.

Dans un mode de réalisation, l'emmanchement de la bague intérieure est effectué par un outil formant poussoir appuyant sur une face frontale de la bague intérieure en passant par lesdits espaces libres.

Dans un mode de réalisation, l'outil de sertissage et l'outil d'emmanchement sont coaxiaux.

L'ensemble poulie-palier-organe transmetteur de couple peut être manipulé avec de faibles risques de perte de pièces et monté de façon simple sur un support. A l'état monté, ledit ensemble assure la limitation du couple transmis, l'amortissement des vibrations et la continuité de fonctionnement de la poulie en cas de couple excessif en ce sens que la poulie est supportée par le roulement. Après rupture de l'organe transmetteur de couple qui fonctionne comme fusible mécanique, la poulie peut continuer à tourner. D'autres organes entraînés par la courroie en contact avec la poulie peuvent continuer à fonctionner normalement. Le roulement assure le centrage et la possibilité de rotation de la poulie.

La présente invention sera mieux comprise à la lecture de la description de quelques modes de réalisation, donnés à titre d'exemples nullement limitatifs et illustrés sur les dessins annexés :
- la figure 1 est une vue arrière en élévation de l'ensemble selon un premier mode de réalisation;
- la figure 2 est une vue en coupe axiale de l'ensemble de la figure 1 ;
- la figure 3 est une vue de face en élévation de l'ensemble de la figure 1;
- les figures 4 et 5 sont des vues partielles en coupe axiale de l'ensemble de la figure 1 en cours de montage;
- la figure 6 est une vue de face en élévation de l'outil de montage mis en oeuvre sur les figures 4 et 5 ;
- la figure 7 est une vue de côté en élévation de l'outil de montage de la figure 6;
- la figure 8 est une vue de face en élévation d'un outil de montage combiné; et
- la figure 9 est une vue de côté en élévation de l'outil de montage de la figure 8.

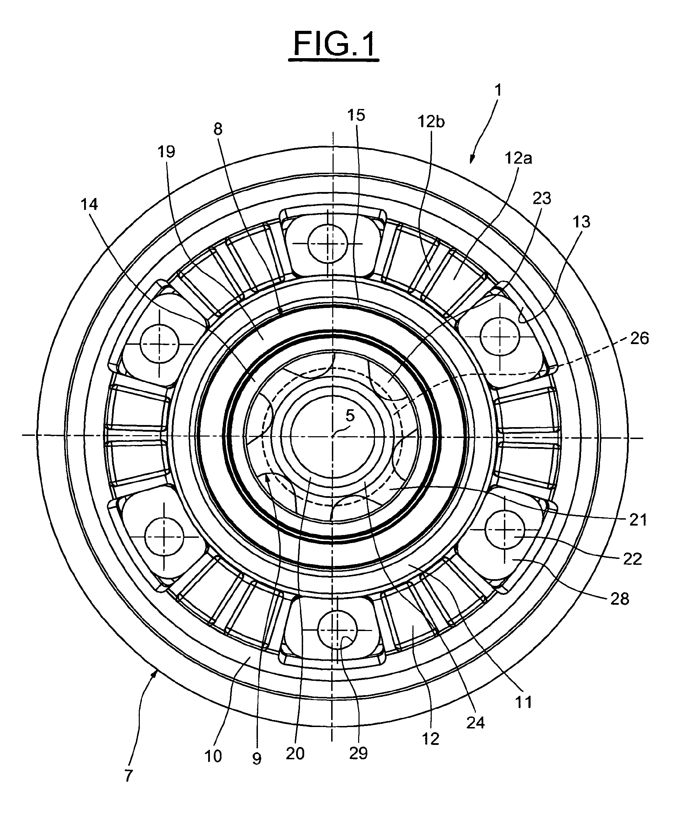

Sur les figures 1 à 5, le dispositif de transmission de couple 1 est monté sur un compresseur 2 comprenant un carter 3 non tournant et un arbre 4 susceptible de tourner autour d'un axe géométrique 5. L'arbre 4 peut être pourvu d'une extrémité étagée 4a se terminant par une portion filetée 4b en vue de la coopération avec un écrou 6.

Le dispositif de transmission de couple 1 comprend une poulie 7, un palier à roulement 8 et un plateau 9 de transmission de couple. La poulie 7 comprend une partie périphérique annulaire 10 offrant une surface extérieure 10a destinée à coopérer avec une courroie non représentée, un alésage 10b et deux surfaces radiales latérales 10c et 10d. La surface extérieure 10a peut être munie de nervures annulaires pour coopérer avec une courroie de type poly-V par exemple. La poulie 7 comprend une partie centrale annulaire 11 coaxiale avec la partie périphérique 10 et comprenant une surface extérieure 11a, un alésage 11b et deux surfaces radiales latérales 11c et 11d. L'alésage 11b peut présenter la forme de nervures annulaires. Les surfaces radiales latérales 11c et 11d peuvent être respectivement en retrait par rapport aux surfaces radiales latérales 10e et 10d.

La poulie 7 comprend également une partie de liaison 12 disposée entre la partie périphérique 10 et la partie centrale 11. La partie de liaison 12 peut être très légèrement en retrait par rapport aux surfaces radiales 10c et 10d de la partie périphérique 10. La partie périphérique 10, la partie centrale 11 et la partie de liaison 12 peuvent être monobloc, par exemple venues de moulage. La poulie 7 peut être réalisée en résine, par exemple à base de polyamide, résine phénolique ou encore polyuréthane.

La partie de liaison 12 peut comprendre un disque central 12a radial et une pluralité de nervures de rigidification 12b perpendiculaires au disque 12a et s'étendant en s'élargissant axialement de la partie centrale 11 à la partie périphérique 10. En outre, une pluralité de trous 13 sont ménagés dans le disque 12a. Les trous 13 peuvent être prévus entre deux nervures 12b et s'étendre radialement sur tout ou partie de la hauteur du disque 12 entre la partie périphérique 10 et la partie centrale 11. Dans le mode de réalisation représenté, trois nervures 12b sont situées entre deux trous 13. Les trous 13 peuvent être au nombre de six. Les nervures 12b peuvent être symétriques par rapport à un plan radial perpendiculaire à l'axe 5.

Le palier à roulement 8 comprend une bague intérieure 14, une bague extérieure 15, au moins une rangée d'éléments roulants 16, une cage 17 de maintien de l'espacement circonférentiel régulier des éléments roulants 16 et deux joints d'étanchéité 18 et 19. La bague intérieure 14 comprend une surface extérieure 14a de révolution, un alésage 14b en contact avec une surface axiale 2a du carter 2 et deux surfaces radiales latérales 14c et 14d, la surface latérale 14d étant en contact avec une surface radiale 2b du carter 2, par exemple un épaulement. Un chemin de roulement 14e de forme toroïdale est ménagé par usinage à partir de la surface extérieure 14a. La surface extérieure 14a est en contact frottant avec les joints d'étanchéité 18 et 19.

La bague extérieure 15 comprend une surface extérieure 15a, un alésage 15b et deux surfaces radiales frontales 15c et 15d respectivement alignées avec les surfaces radiales 14c et 14d. Les surfaces radiales 15c et 15d peuvent être en retrait par rapport aux surfaces radiales 11c et 11d de la partie centrale 11. Un chemin de roulement 15e est ménagé par usinage à partir de l'alésage 15b. Le chemin de roulement 15e présente une forme toroïdale.

Les éléments roulants 16, par exemple des billes, sont disposés entre les chemins de roulement 14e et 15e des bagues intérieures 14 et 15. Des rainures annulaires sont ménagées à partir de la surface extérieure 15a de la bague extérieure 15 en complémentarité de forme avec les nervures de l'alésage 11d de la partie centrale 11 de la poulie 7. En d'autres termes, la surface intérieure 11b de la poulie 7 et la surface extérieure 15a du palier à roulement 8 sont en concordance de forme. La poulie 7 peut être surmoulée sur la bague extérieure 15 du palier à roulement 8. Il en résulte une excellente cohésion entre ces deux pièces. Les joints d'étanchéité 18 et 19 peuvent être montés à force dans des rainures ménagées à partir de l'alésage 15b et à proximité des surfaces radiales 15c et 15d de la bague extérieure 15.

Illustré sur les figures 1, 2 et 4, le carter 2 se trouve dans un état intermédiaire de montage dans lequel la fixation définitive de la bague intérieure 14 du palier à roulement 8 sur ledit carter 2 n'a pas encore été effectuée.

Le plateau 9 de transmission de couple se présente sous la forme d'une pièce monobloc qui peut être réalisée en matériau synthétique ou encore en alliage léger. Le plateau 9 comprend un manchon 20 de petit diamètre monté sur l'extrémité 4a de l'arbre 4, présentant un diamètre inférieur au reste de l'arbre 4 de telle sorte que le manchon 20 peut être serré entre un épaulement et l'écrou 6 éventuellement complété par une rondelle. Le plateau 9 comprend une pluralité de bras radiaux 21 s'étendant vers l'extérieur à partir d'une extrémité axiale du manchon de petit diamètre 20 à proximité de l'écrou 9. A partir de l'extrémité libre des bras 21, le plateau 9 comprend une pluralité de doigts 22 de forme générale cylindrique s'étendant parallèlement à l'axe 5. Les bras 21 laissent entre eux de larges ouvertures 23 ou espaces libres. Les espaces libres 23 sont ici au nombre de six et répartis de manière régulière sur le plateau 9 en considérant le sens circonférentiel. A leurs extrémités de petit et de grand diamètre, les bras 21 se réunissent en une portion annulaire de petit diamètre 24 et en une portion annulaire de grand diamètre 25. Les espaces libres 23 s'étendent radialement entre la portion annulaire de grand diamètre 25 et la portion annulaire de petit diamètre 24. Sur le bord extérieur de la portion annulaire de petit diamètre 24, est ménagée une saignée 26 de forme circulaire, laissant subsister une portion 27 de faible épaisseur susceptible de se rompre en cas d'excès de couple transmis par le plateau 9. La saignée 26 peut être ménagée à partir de la face du plateau 9 opposée au manchon 20 et aux doigts 22.

Le dispositif de transmission de couple 1 comprend en outre une pluralité de tampons amortisseurs 28 disposés dans les trous 13 autour des doigts 22. En d'autres termes, les doigts 22 peuvent être entourés par les tampons 13 qui forment un amortisseur de vibrations entre la poulie 7 et le plateau 9. Les tampons 28 peuvent être réalisés en un matériau élastique, par exemple à base d'élastomère. Les tampons 28 peuvent être disposés entre la surface extérieure 11a de la partie centrale 11 et l'alésage 10b de la partie périphérique 10 de la poulie 7. Les tampons 28 peuvent être disposés entre deux nervures 12b de la partie de liaison 12. Les tampons 28 peuvent présenter une dimension angulaire supérieure à leur dimension radiale pour assurer un bon amortissement dans le sens angulaire. Des trous 29 sont ménagés dans les tampons 28 pour les doigts 22. Les trous 29 peuvent être cylindriques et parallèles à l'axe 5.

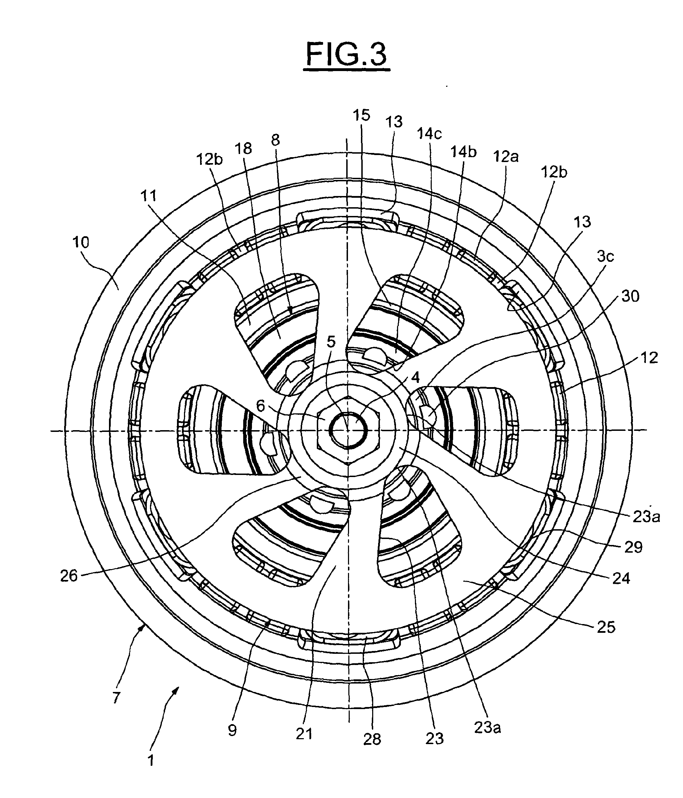

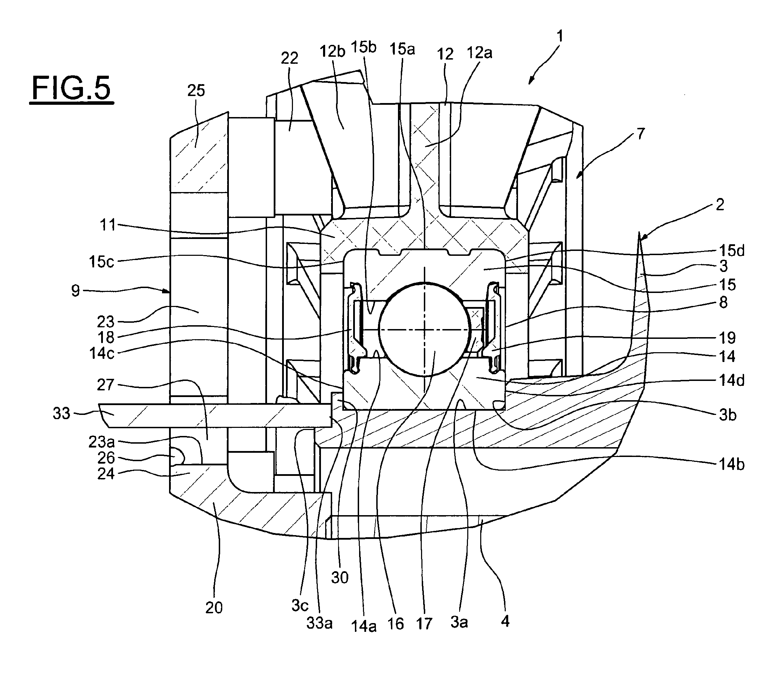

Le dispositif de transmission de couple 1 comprenant la poulie 7, le palier à roulement 8, le plateau 9 et les tampons 28 forme un ensemble qui peut être manipulé avec de très faibles risques de perte de pièces puis monté sur un organe à entraîner, par exemple un compresseur de climatisation, la bague intérieure 14 du palier à roulement 8 venant sur une surface extérieure axiale d'un carter tandis que l'alésage du manchon de petit diamètre 20 du plateau 9 peut venir sur une surface extérieure axiale d'un pièce tournante, par exemple un arbre. La fixation sur l'arbre peut être assurée par l'écrou 6. La fixation sur le carter 2 peut être assurée par repoussage de matière en vue de former une pluralité de bourrelets localisés 30 visibles sur les figures 3 et 5. Les bourrelets 30 résultent de déformations plastiques provoquées sur l'extrémité du carter 3, provoquant un renflement vers l'extérieur d'une surface extérieure axiale 3a, à partir d'une surface frontale 3c radiale dudit carter 3. La longueur axiale de la surface extérieure 3a peut être légèrement supérieure à la longueur axiale de la bague intérieure 14 de telle sorte que la surface frontale 3c du carter 3 est décalée par rapport à la surface frontale 14c de la bague intérieure 14, ce qui permet de disposer de suffisamment de matière à déformer pour constituer le bourrelet 30.

Le bourrelet 30 est situé à une distance radiale de l'axe géométrique 5 supérieure à la distance minimale entre les espaces libres 23 et ledit axe géométrique 5. Par ailleurs, les bourrelets 30 sont de préférence répartis angulairement autour de l'axe géométrique 5 de façon identique à la répartition angulaire d'au moins une partie des espaces libres 23. Les bourrelets 30 sont ainsi visibles sur la figure 3 à travers les espaces libres 23, le plateau transmetteur de couple 9 étant monté sur la poulie 7. Comme on le voit également sur la figure 3, l'alésage 14b de la bague intérieure 14 présente un rayon supérieur à la distance entre l'axe géométrique 5 et l'extrémité interne 23a des espace libres 23 ménagés dans la partie radiale annulaire du plateau transmetteur de couple 9. En d'autres termes, l'extrémité interne 23a de chaque espace libre 23 est décalée radialement vers l'intérieur en direction de l'axe 5, par rapport à l'alésage 14b de la bague intérieure 14.

Plus précisément, l'alésage de la surface extérieure axiale 3a du carter 3 présente un rayon supérieur à la distance entre l'axe géométrique 5 et l'extrémité interne 23a des espaces libres 23. L'extrémité interne 23a des espaces libres 23 est donc décalée radialement vers l'intérieur par rapport à l'alésage de la surface extérieure axiale 3a du carter 3. Les bords internes 23a des espaces libres sont donc situés à une distance de l'axe de rotation 5 inférieure au rayon de l'alésage de la surface extérieure axiale 3a.

Les trous 29 des manchons élastiques 28 peuvent présenter un diamètre à l'état libre légèrement inférieur au diamètre des doigts 22 du plateau transmetteur de couple 9, de telle sorte que le montage desdits doigts 22 dans les trous 29 s'effectue à force assurant ainsi une retenue mutuelle axiale du plateau transmetteur de couple 9 par rapport au manchon 28 et à la poulie 7. On dispose ainsi d'un ensemble pouvant être manipulé avec de faibles risques de perte de pièces en vue de son montage sur un organe, par exemple un compresseur de climatisation.

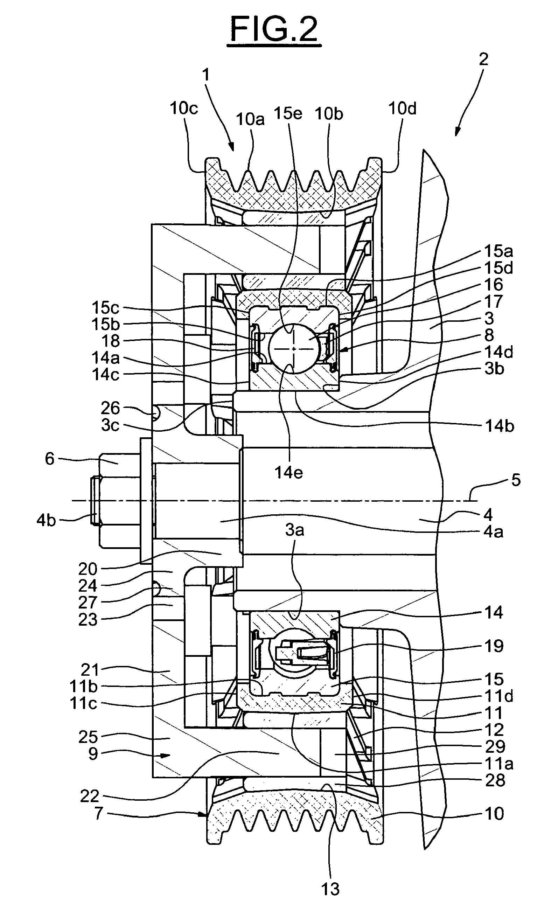

Le montage peut s'effectuer de la façon suivante. On amène l'ensemble comprenant la poulie 7, le palier à roulement 8 et le plateau transmetteur de couple 9 par un mouvement axial vers le carter 3 et l'arbre 4 de l'organe mené. On emmanche la bague intérieure 14 du palier à roulement 8 sur la surface extérieure 3a du carter 3 jusqu'à venir en butée contre une surface radiale annulaire 3b d'appui prévue à cet égard. Simultanément, le manchon 20 du plateau transmetteur de couple 9 est monté autour de l'extrémité 4a de l'arbre 4. Puis, on visse l'écrou 6 sur la partie filetée 4b de l'arbre 4 venant ainsi bloquer le plateau de transmission de couple 9. L'état ainsi obtenu est illustré sur la figure 2.

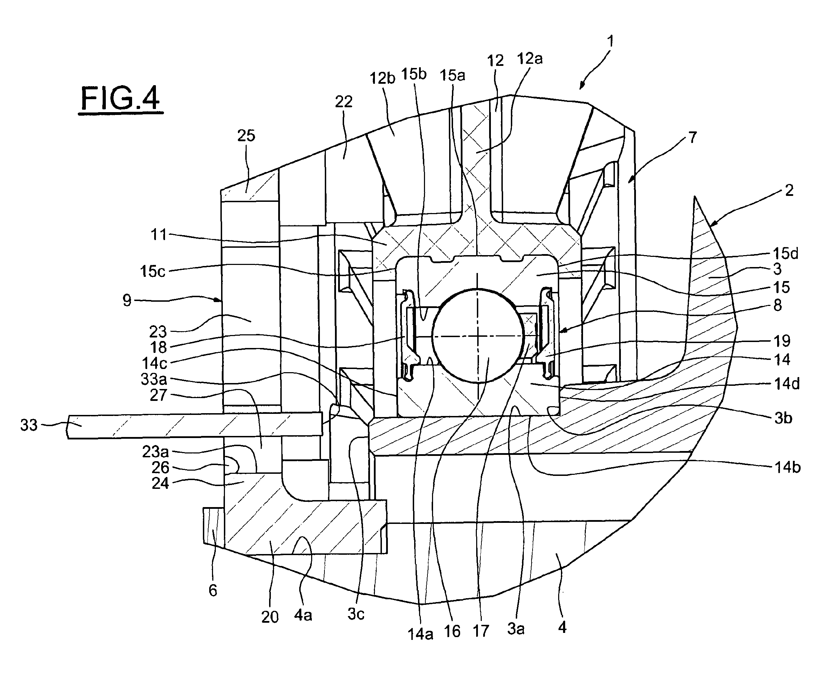

On vient ensuite, voir figures 4 et 5, former les bourrelets 30 par déformation de l'extrémité libre du carter 3, notamment en venant repousser une partie de la matière formant la surface radiale d'extrémité 3c dudit carter 3 à proximité de la surface extérieure 3a pour provoquer un fluage de la matière en direction de la face frontale 14c de la bague intérieure 14 et radialement légèrement vers l'extérieur, provoquant ainsi une interférence de forme empêchant un déplacement axial de la bague intérieure 14 par rapport au carter 3.

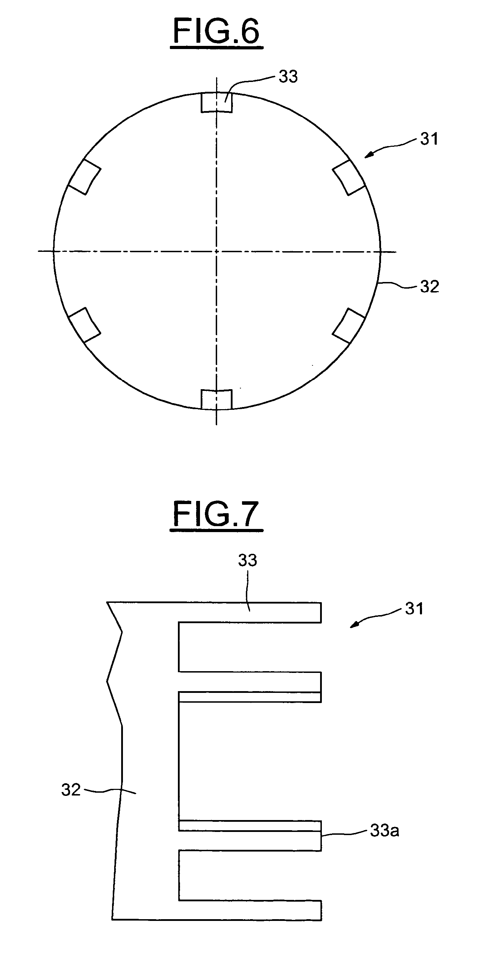

L'étape de sertissage peut être réalisée par un outil de sertissage 31 illustré sur les figures 6 et 7, comprenant une couronne 32 supportant une pluralité de dents axiales 33 ou poinçons s'étendant d'un même côté de la couronne 32. Les dents 33 peuvent présenter une extrémité libre 33a radiale. Les dents 33 peuvent être disposées à une distance de l'axe géométrique 5, telles que la surface d'extrémité 33a vienne interférer avec la surface d'extrémité 3c du carter 3. Les dents 33 passent dans les espaces libres 23 ménagés dans le plateau transmetteur de couple 9, voir, figure 4, puis entrent en contact avec l'extrémité libre du carter 3, voir figure 5, et provoquent le fluage de la matière vers l'extérieur, formant ainsi les bourrelets 30.

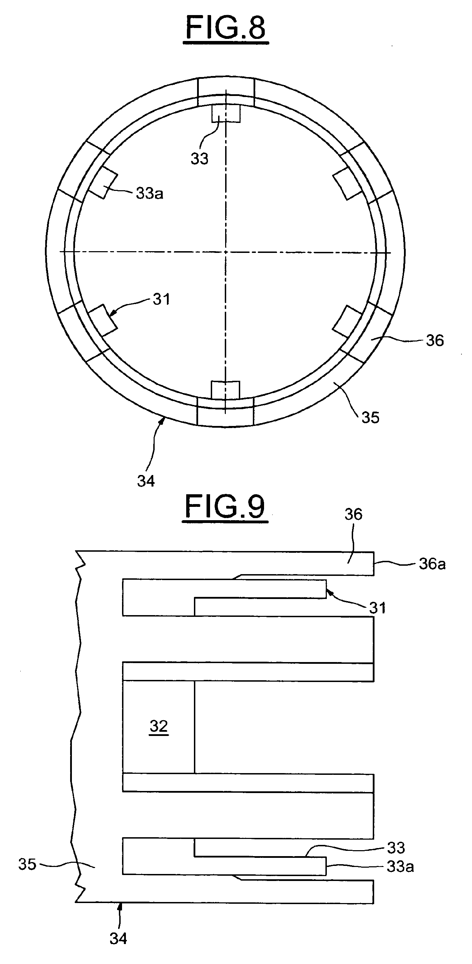

Dans le mode de réalisation illustré sur les figures 8 et 9, il est prévu un outil combiné d'emmanchement et de sertissage comprenant une partie interne formée par un outil de sertissage 31 identique à celui du mode de réalisation précédent, et un outil externe 34 comprenant une couronne 35 et une pluralité de dents axiales 36 ou poussoirs de longueur légèrement supérieure aux dents 33 et disposées sur la surface extérieure desdites dents 33. Les dents 36 présentent une surface radiale d'extrémité prévue pour venir appuyer sur la surface radiale 14c de la bague intérieure 14 du palier à roulement 8 pour assurer l'emmanchement de ladite bague intérieure 14 sur la surface extérieure 3a du carter 3. L'outil externe 34 peut ainsi être actionné en premier pour l'emmanchement, puis l'outil interne 31 est actionné à son tour et déplacé par un mouvement axial pour sertir la bague intérieure 14 du roulement sur le carter 3.

Grâce à l'invention, il n'est plus nécessaire d'utiliser des circlips pour la retenue axiale du roulement ni d'usiner sur le carter la rainure logeant le circlips. L'opération de montage de l'ensemble sur l'organe à entraîner qui est effectuée chez l'équipementier devient alors très simple et peut facilement être automatisée. Le montage peut se résumer à la manoeuvre de deux outils à doigts axiaux selon une translation axiale. On obtient ainsi une réduction significative des coûts de montage d'un organe mené, notamment d'un compresseur de climatisation dans un véhicule automobile.

## Revendications

1. Compresseur de climatisation pourvu d'un carter (3), d'un arbre (4) apte à tourner autour d'un axe (5), et d'un dispositif de transmission de couple (1) comprenant une poulie (7), un palier à roulement (8) disposé dans la poulie (7) et comprenant une bague intérieure (14), une bague extérieure (15) et au moins une rangée d'éléments roulants (16), et un organe transmetteur de couple (9) muni d'une partie externe liée angulairement à la poulie (7), d'une partie interne (20) fixée à l'arbre (4) et d'au moins deux bras (21) reliant la partie externe et la partie interne, **caractérisé en ce que** des espaces libres (23) sont ménagés entre les bras (21), l'alésage (14b) de la bague intérieure (14) présentant un rayon supérieur à la distance entre l'axe (5) de rotation et une extrémité interne (23a) desdits espaces libres (23) pour permettre l'introduction d'un outil de sertissage, et **en ce que** des déformations plastiques locales (30) du carter interfèrent avec une face frontale (14c) de la bague intérieure (14), lesdites déformations plastiques locales (30) étant disposées dans l'alignement axial desdits espaces libres (23) dans au moins une position angulaire relative entre l'organe transmetteur de couple (9) et la bague intérieure (14).

2. Compresseur selon la revendication 1, dans lequel les bras (21) comprennent une zone de faible section (27) destinée à se rompre en cas de couple supérieur à un seuil.

3. Compresseur selon la revendication 2, dans lequel les zones de faible section (27) sont disposées à proximité de la partie interne (20) et présentent une épaisseur axiale inférieure à celle du reste des bras (21).

4. Compresseur selon l'une quelconque des revendications précédentes, dans lequel la partie externe comprend une pluralité de doigts axiaux (22), un manchon élastique (28) allongé angulairement étant disposé autour d'au moins un doigt (22), ledit manchon (28) étant monté dans une ouverture (13) de la partie externe de la poulie (7).

5. Procédé de montage d'un compresseur de climatisation dans lequel :
- on monte sur un arbre (4) de compresseur un ensemble comprenant une poulie (7), un palier à roulement (8) disposé dans la poulie (7) et comprenant une bague intérieure (14), une bague extérieure (15) et au moins une rangée d'éléments roulants (16), et un organe transmetteur de couple (9) comprenant une partie externe liée angulairement à la poulie (7), une partie interne et au moins deux bras (21) reliant la partie externe et la partie interne, des espaces libres (23) étant ménagés entre les bras, l'alésage (14b) de la bague intérieure (14) présentant un rayon supérieur à la distance entre l'axe (5) de rotation et une extrémité interne (23a) desdits espaces libres (23),
- on sertit la bague intérieure (14) sur un carter (2) de compresseur par l'introduction d'un outil de sertissage entre les bras de l'organe transmetteur de couple (9), ledit outil étant muni de plusieurs dents axiales passant dans les espaces libres (23) ménagés entre les bras et formant poinçons repoussant la matière du carter contre la face frontale de la bague intérieure lors d'un mouvement axial.

6. Procédé selon la revendication 5, dans lequel l'étape de montage de l'ensemble sur un arbre de compresseur comprend l'emmanchement de la bague intérieure (14) sur l'arbre (4).

7. Procédé selon la revendication 6, dans lequel l'emmanchement de la bague intérieure est effectué par un outil appuyant sur une face frontale de la bague intérieure en passant par lesdits espaces libres.

8. Procédé selon la revendication 6, dans lequel l'outil de sertissage et l'outil d'emmanchement sont coaxiaux.

## Claims

1. Air-conditioning compressor provided with a casing (3), with a shaft (4) able to rotate about an axis (5), and with a torque-transmitting device (1) comprising a pulley (7), a rolling bearing (8) positioned inside the pulley (7) and comprising an inner ring (14), an outer ring (15) and at least one row of rolling elements (16), and a torque-transmitting member (9) equipped with an external part angularly connected to the pulley (7), with an internal part (20) fixed to the shaft (4) and with at least two arms (21) connecting the external part and the internal part, **characterized in that** empty spaces (23) are formed between the arms (21), the bore (14b) of the inner ring (14) having a radius greater than the distance between the axis (5) of rotation and an internal end (23a) of the said empty spaces (23) so as to allow the insertion of a crimping tool, and **in that** local plastic deformations (30) of the casing interfere with a transverse face (14c) of the internal ring (14), the said local plastic deformations (30) being positioned in axial alignment with the said empty spaces (23) in at least one relative angular position between the torque-transmitting member (9) and the inner ring (14).

2. Compressor according to Claim 1, in which the arms (21) have a small-section region (27) intended to break in the event of a torque higher than a threshold value.

3. Compressor according to Claim 2, in which the small-section regions (27) are positioned in close proximity to the internal part (20) and have an axial thickness less than that of the remainder of the arms (21).

4. Compressor according to any one of the preceding claims, in which the external part comprises a plurality of axial fingers (22), an angularly elongate elastic sleeve (28) being positioned around at least one finger (22), the said sleeve (28) being mounted in an opening (13) of the external part of the pulley (7).

5. Method of assembling an air-conditioning compressor, in which:
- an assembly comprising a pulley (7), a rolling bearing (8) positioned in the pulley (7) and comprising an inner ring (14), an outer ring (15) and at least one row of rolling elements (16), and a torque-transmitting member (9) comprising an external part angularly connected to the pulley (7), an internal part and at least two arms (21) connecting the external part and the internal part is mounted on a compressor shaft (4), empty spaces (23) being formed between the arms, the bore (14b) of the inner ring (14) having a radius greater than the distance between the axis (5) of rotation and an internal end (23a) of the said empty spaces (23),
- the inner ring (14) is crimped onto a compressor casing (2) by inserting a crimping tool between the arms of the torque-transmitting member (9), the said tool being equipped with several axial teeth that enter the empty spaces (23) formed between the arms and form punches upsetting the material of the casing against the transverse face of the inner ring in an axial movement.

6. Method according to Claim 5, in which the step of mounting the assembly on a compressor shaft comprises fitting the inner ring (14) onto the shaft (4).

7. Method according to Claim 6, in which the inner ring is fitted using a tool that presses against a transverse face of the inner ring by entering via the said empty spaces.

8. Method according to Claim 6, in which the crimping tool and the fitting tool are coaxial.

## Patentansprüche

1. Klimaanlagenverdichter, welcher versehen ist mit einem Gehäuse (3), einer Welle (4), die in der Lage ist, sich um eine Achse (5) zu drehen, und einer Drehmomentübertragungsvorrichtung (1), welche umfasst: eine Riemenscheibe (7), ein Wälzlager (8), das in der Riemenscheibe (7) angeordnet ist und einen inneren Ring (14), einen äußeren Ring (15) und mindestens eine Reihe von Wälzkörpern (16) umfasst, und ein Drehmomentübertragungselement (9), das mit einem äußeren Teil, der winklig mit der Riemenscheibe (7) verbunden ist, mit einem inneren Teil (20), der an der Welle (4) befestigt ist, und mit mindestens zwei Armen (21), die den äußeren Teil und den inneren Teil verbinden, ausgestattet ist, **dadurch gekennzeichnet, dass** Freiräume (23) zwischen den Armen (21) ausgebildet sind, wobei die Bohrung (14b) des Innenringes (14) einen Radius aufweist, der größer als der Abstand zwischen der Drehachse (5) und einem inneren Ende (23a) der Freiräume (23) ist, um die Einführung eines Bördelwerkzeugs zu ermöglichen, und **dadurch**, dass lokale plastische Verformungen (30) des Gehäuses mit einer Stirnfläche (14c) des Innenringes (14) zusammenwirken, wobei die lokalen plastischen Verformungen (30) axial fluchtend mit den Freiräumen (23) in mindestens einer relativen Winkelposition zwischen dem Drehmomentübertragungselement (9) und dem Innenring (14) angeordnet sind.

2. Verdichter nach Anspruch 1, wobei die Arme (21) einen Bereich mit kleinem Querschnitt (27) umfassen, der dazu bestimmt ist, im Falle eines Drehmoments, das größer als ein Schwellwert ist, zu brechen.

3. Verdichter nach Anspruch 2, wobei die Bereiche mit kleinem Querschnitt (27) in der Nähe des inneren Teils (20) angeordnet sind und eine axiale Dicke aufweisen, die kleiner als diejenige des Restes der Arme (21) ist.

4. Verdichter nach einem der vorhergehenden Ansprüche, wobei der äußere Teil mehrere axiale Finger (22) umfasst, wobei eine elastische Hülse (28), die winklig verlängert ist, um mindestens einen Finger (22) herum angeordnet ist, wobei die Hülse (28) in einer Öffnung (13) des äußeren Teils der Riemenscheibe (7) angebracht ist.

5. Verfahren zur Montage eines Klimaanlagenverdichters, wobei:
- auf einer Verdichterwelle (4) eine Anordnung angebracht wird, welche umfasst: eine Riemenscheibe (7), ein Wälzlager (8), das in der Riemenscheibe (7) angeordnet ist und einen inneren Ring (14), einen äußeren Ring (15) und mindestens eine Reihe von Wälzkörpern (16) umfasst, und ein Drehmomentübertragungselement (9), das einen äußeren Teil, der winklig mit der Riemenscheibe (7) verbunden ist, einen inneren Teil und mindestens zwei Arme (21), die den äußeren Teil und den inneren Teil verbinden, umfasst, wobei Freiräume (23) zwischen den Armen (21) ausgebildet sind, wobei die Bohrung (14b) des Innenringes (14) einen Radius aufweist, der größer als der Abstand zwischen der Drehachse (5) und einem inneren Ende (23a) der Freiräume (23) ist,
- der Innenring (14) durch die Einführung eines Bördelwerkzeugs zwischen die Arme des Drehmoment-übertragungselements (9) auf ein Verdichtergehäuse (2) aufgebördelt wird, wobei das Werkzeug mit mehreren axialen Zähnen ausgestattet ist, die sich in den zwischen den Armen ausgebildeten Freiräumen (23) bewegen und Stempel bilden, die bei einer axialen Bewegung das Material des Gehäuses gegen die Vorderseite des Innenringes zurückdrücken.

6. Verfahren nach Anspruch 5, wobei der Schritt des Anbringens der Anordnung auf einer Verdichterwelle das Aufpressen des Innenringes (14) auf die Welle (4) umfasst.

7. Verfahren nach Anspruch 6, wobei das Aufpressen des Innenringes mit einem Werkzeug durchgeführt wird, das auf eine Vorderseite des Innenringes drückt und sich dabei durch die Freiräume hindurch bewegt.

8. Verfahren nach Anspruch 6, wobei das Bördelwerkzeug und das Aufpresswerkzeug koaxial sind.
